# DEMANDE DE BREVET EUROPEEN

(11) **EP 1 883 154 A1**
(43) Date de publication de la demande: **30.01.2008**
(21) Numéro de dépôt: 07301255.1
(22) Date de dépôt: 20.07.2007
(51) Int. Cl.: H02P 1/04, H02P 1/20, F02N 11/08

(54) **Dispositif de commande d'une machine électrique telle qu'un démarreur d'un moteur a combustion interne de véhicule**

(30) Priorité: 24.07.2006 FR 0606740
(71) Demandeur: Renault SAS, 92100 Boulogne Billancourt (FR)
(72) Inventeur: Couetoux, Hervé, 91470, Les Molieres (FR)

(57) **Abrégé**

L'invention concerne un dispositif de commande (10) d'une machine électrique (20), notamment pour la commande d'un démarreur électrique susceptible d'être couplé à l'entraînement d'un vilebrequin (30) d'un moteur à combustion interne. Le dispositif selon l'invention comprend :
• un premier moyen de commutation (11) pour relier électriquement en série une source de tension (40), un moyen résistif (50) de démarrage et la machine électrique (20),
• un deuxième moyen de commutation (12) pour court-circuiter le moyen résistif (50), et
• un moyen d'actionnement (13) pour actionner le premier moyen de commutation (11) au démarrage de la machine électrique (20) puis actionner le deuxième moyen de commutation (12) dans une situation prédéfinie.

Application à la commande d'un démarreur d'un véhicule automobile.

## Description

L'invention concerne un dispositif de commande d'une machine électrique. L'invention est particulièrement intéressante pour la commande d'un démarreur électrique susceptible d'être couplé à l'entraînement d'un vilebrequin d'un moteur à combustion interne et trouve notamment une application dans le domaine des moteurs thermiques de véhicules.

Pour démarrer un moteur à combustion interne d'un véhicule, il est connu d'utiliser une machine électrique telle qu'un démarreur. Lors de la phase de démarrage, un dispositif de commande vient fermer un premier moyen de commutation tel qu'un relais pour relier la machine électrique à une source d'énergie, en l'occurrence un accumulateur (communément appelé "batterie") du véhicule, utilisé par ailleurs en parallèle pour alimenter en énergie un deuxième réseau électrique (encore appelé réseau de bord) incluant tous les autres consommateurs du véhicule (phares, calculateurs, dispositifs de sécurité, accessoires internes tels que radio, ventilateur, etc.).

Récemment, on a vu apparaître sur le marché des véhicules disposant d'une fonctionnalité dite Stop/Start, qui consiste à couper automatiquement le moteur thermique lorsque la vitesse du véhicule est nulle, par exemple en ville à l'arrêt à un feu rouge ou dans les embouteillages. Cette fonctionnalité contribue à réduire la consommation globale du véhicule et la pollution qu'il génère (pollution de l'air, pollution sonore, etc.).

La puissance électrique consommée par le démarreur à l'instant où il démarre est particulièrement importante, lors d'un premier démarrage ("à froid") du véhicule, mais également lors de démarrages ultérieurs ("à chaud"), par exemple lors de la mise en oeuvre de la fonction Stop/Start.

La puissance importante consommée à l'instant de démarrage entraîne entre autre un pic de courant important dans le circuit de démarrage incluant le démarreur. Du fait de la résistance interne de l'accumulateur, le pic de courant entraîne une chute de tension importante aux bornes du réseau de bord.

Cette chute de tension a des conséquences diverses sur le réseau de bord, plus ou plus moins préjudiciables pour les occupants du véhicule ; elle peut entraîner pendant quelques fractions de seconde par exemple une gêne visuelle (baisse d'efficacité des phares, de l'éclairage du tableau de bord, etc.), une gêne acoustique (coupure de la radio ou d'un autre équipement multimédia, etc.), une perturbation du système de navigation, un ralentissement d'actuateurs (lève-vitres, essuie-vitres, etc.), voire plus grave, une réinitialisation d'un ou plusieurs calculateurs de bord avec des conséquences notamment sur la disponibilité pendant quelques secondes de dispositifs de sécurité tels que les coussins gonflables ou les dispositifs d'assistance au freinage ou à la conduite.

Cette chute de tension au démarrage et ses conséquences sont généralement tolérées lors du premier démarrage du moteur ("à froid", avant tout mouvement du véhicule) ; dans ce cas en effet, le véhicule à l'arrêt est dans une position sécurisée (position de stationnement, parking, garage, etc.), la gêne occasionnée est finalement limitée car peu de dispositifs consommant de l'énergie sont en activité et de plus elle n'a lieu qu'une fois, par définition au premier démarrage. Toutefois, cette situation n'est pas acceptable dans le cadre de la mise en oeuvre de la fonction Stop / Start qui suppose des arrêts et des démarrages fréquents, dans des situations qui ne sont pas nécessairement sécuritaires, comme un arrêt à un feu rouge ou un arrêt à un stop avant franchissement d'une voie prioritaire par exemple.

Une première solution connue à ce problème est l'utilisation d'un accumulateur auxiliaire qui a pour fonction de maintenir une alimentation suffisante d'au moins une partie des consommateurs du réseau de bord, notamment les plus sensibles.

Une deuxième solution connue est l'utilisation d'un accumulateur auxiliaire de technologie améliorée, délivrant une puissance importante, et qui est utilisé pour alimenter le démarreur, le réseau de bord restant dans ce cas alimenté par l'accumulateur principal.

Une autre solution évidente est bien sûr d'utiliser un accumulateur principal surdimensionné pour fournir le courant important nécessaire au démarrage tout en garantissant une tension suffisante sur le réseau de bord.

Ces trois solutions permettent d'éviter, ou du moins de limiter, la chute de tension sur le réseau de bord au démarrage du moteur thermique. Toutefois, elles nécessitent l'utilisation d'un accumulateur supplémentaire ou d'un accumulateur surdimensionné, ce qui a des conséquences non négligeables : surcoûts liés à l'achat, à l'installation, au câblage, à la maintenance, au remplacement d'un tel accumulateur, difficulté d'intégration dans le véhicule (problème de poids et d'encombrement), augmentation du poids du véhicule qui entraîne une augmentation de sa consommation énergétique et de la pollution qu'il génère, etc. De plus, l'utilisation d'un accumulateur auxiliaire nécessite l'utilisation d'un dispositif de commutation entre les deux accumulateurs, qui soit sécurisé et fiable (généralement à base de relais électromécanique et de diode ou leur équivalent électronique sous la forme de semi-conducteurs) et qui est donc délicat et cher à mettre en oeuvre.

L'invention a pour objet d'apporter une solution nouvelle au problème posé, et plus précisément de proposer un moyen pour limiter la puissance consommée par une machine électrique lors de son démarrage, sans utiliser d'accumulateur auxiliaire ou d'accumulateur surdimensionné.

Ce but est atteint avec un dispositif de commande selon l'invention caractérisé en ce qu'il comprend
- un premier moyen de commutation pour relier électriquement en série une source de tension, un moyen résistif de démarrage et la machine électrique (20),
- un deuxième moyen de commutation pour court-circuiter le moyen résistif, et
- un moyen d'actionnement pour actionner le premier moyen de commutation au démarrage de la machine électrique puis actionner le deuxième moyen de commutation à un instant prédéfini.

Le moyen résistif en série avec la machine électrique permet de limiter l'appel de courant lors de la mise sous tension de la machine électrique par le premier moyen de commutation. En limitant l'appel de courant dans la machine électrique, on limite de fait la chute de tension sur le réseau de bord du véhicule. Au bout d'un temps prédéfini, le moyen résistif n'est plus nécessaire et il est court-circuité par le deuxième moyen de commutation.

Avec l'invention, il n'est plus nécessaire d'utiliser une source d'énergie auxiliaire, ni de surdimensionner la source d'énergie principale.

Selon un mode de réalisation, le dispositif de commande comprend également un moyen de temporisation pour mesurer un temps prédéfini, et le moyen d'actionnement actionne le deuxième moyen de commutation à l'échéance du temps prédéfini.

Selon un autre mode de réalisation, la situation prédéfinie est fonction d'un état de performance de la source de tension, fonction :
- d'un âge de la source de tension, et / ou
- d'un état de santé de la source de tension, et / ou
- d'une charge de la source de tension, et / ou ou
- d'une tension aux bornes de la source de tension avant l'actionnement du premier moyen de commutation.

Selon un autre mode de réalisation encore, le dispositif de commande comprend également un moyen pour mesurer une vitesse de rotation du vilebrequin, et le moyen d'actionnement actionne le deuxième moyen de commutation lorsque la vitesse de rotation du vilebrequin dépasse une valeur prédéfinie.

Selon un autre mode de réalisation encore, le dispositif de commande comprend également un moyen pour mesurer un angle absolu de rotation du vilebrequin, et dans lequel le moyen d'actionnement actionne le deuxième moyen de commutation :
- lors d'un deuxième passage du vilebrequin dans une position dite "moteur à plat", ou
- un écart angulaire après une première compression d'un cylindre du moteur.

Selon un autre mode de réalisation, le dispositif de commande comprend également un moyen pour mesurer une tension d'alimentation d'un réseau électrique secondaire alimenté par la source de tension en parallèle de la machine électrique, et dans lequel le moyen d'actionnement actionne le deuxième moyen de commutation lorsque la tension d'alimentation du réseau secondaire est supérieure à une valeur prédéfinie.

L'invention sera mieux comprise et d'autres caractéristiques et avantages apparaîtront à la lecture de la description qui va suivre, d'un exemple de mise en oeuvre d'un dispositif de commande d'une machine électrique selon l'invention. La description est à lire en relation aux dessins annexés dans lesquels :
- la figure 1 est un schéma électrique d'un dispositif de commande selon l'invention,
- la figure 1b montre l'évolution du taux de répétition autorisé dans un fonctionnement de type Stop/Start,
- la figure 1c montre le choix d'un paramètre du dispositif,
- les figures 2a et 2b montrent l'évolution de la vitesse de rotation de la machine électrique et du moteur thermique qu'elle entraîne, en fonction du temps, dans le cas d'un moteur à injection non directe (figure 2a) et dans le cas d'un moteur à injection directe (figure 2b) et
- les figures 3a et 3b montrent l'évolution de la tension et du courant aux bornes d'un accumulateur commandé par un dispositif de commande conventionnel (figure 3a) et commandé par un dispositif de commande selon l'invention (figure 3b).

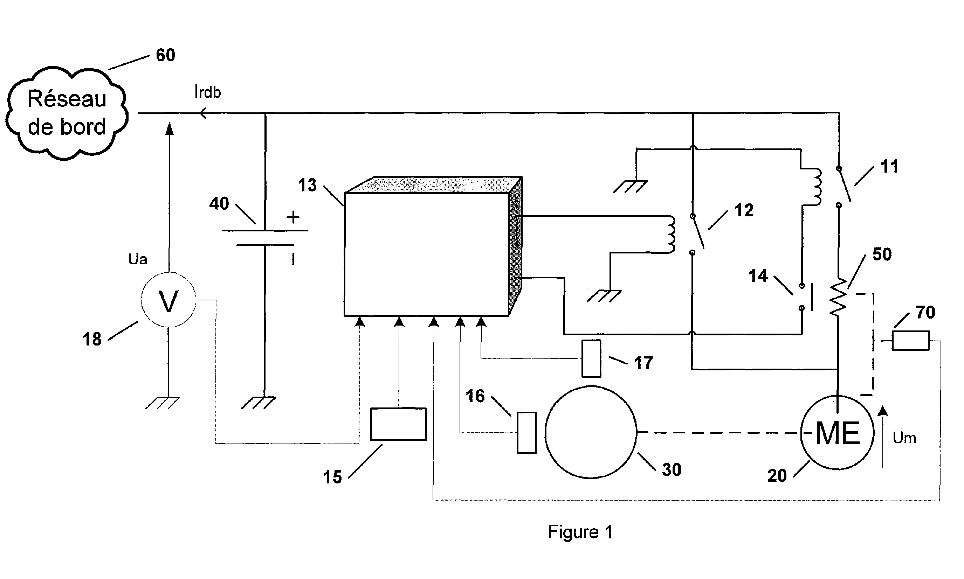

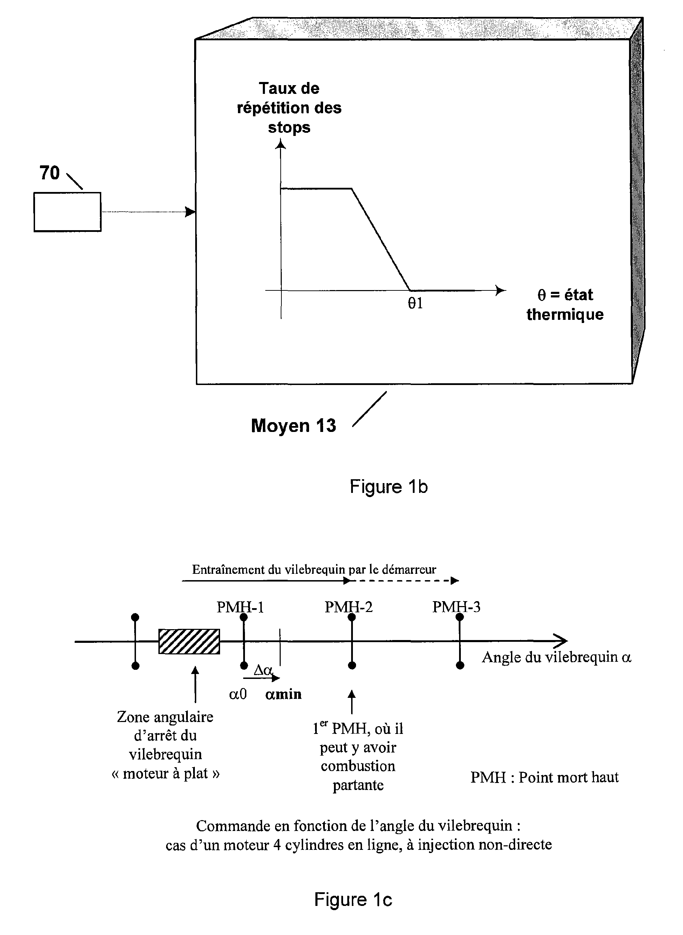

Le schéma de la figure 1 montre un dispositif de commande 10 selon l'invention, appliqué à titre d'exemple à la commande d'un démarreur électrique 20 susceptible d'être couplé à l'entraînement d'un vilebrequin 30 d'un moteur à combustion interne d'un véhicule automobile. La machine électrique est par exemple un moteur à courant continu. Le dispositif de commande 10 comprend selon l'invention :
- un premier moyen de commutation 11 pour relier électriquement en série une source de tension 40, un moyen résistif 50 de démarrage et la machine électrique 20,
- un deuxième moyen de commutation 12 pour court-circuiter le moyen résistif 50, et
- un moyen d'actionnement 13 pour actionner le premier moyen de commutation 11 au démarrage de la machine électrique 20 puis actionner le deuxième moyen de commutation 12 dans une situation prédéfinie.

Dans l'exemple de réalisation représenté figure 1, le premier moyen de commutation 11 et / ou le deuxième moyen de commutation 12 sont des interrupteurs commandés, de type relais électromécaniques. Dans un autre exemple, le ou les moyens de commutation sont réalisés à base de composants de type semi-conducteurs.

De préférence, notamment dans le cas de relais électromécaniques, afin de compenser le temps de réaction du moyen de commutation 12, de l'ordre de 20 à 30 ms dans la pratique, le moyen 13 doit anticiper sur l'instant T2 de fermeture du deuxième moyen 12.

Dans l'exemple représenté, le moyen résistif est une résistance 50 de puissance, de l'ordre de quelques dizaines de milliOhms (par exemple, environ 20 à 30 milliOhms pour un démarreur d'un moteur essence d'un véhicule particulier de petite cylindrée), capable de supporter des courants de l'ordre de plusieurs centaines d'Ampères (par exemple, environ 300 à 600 A, typiquement 450 A).

Le moyen résistif peut également être constitué d'un ensemble de résistances de puissances associées en série. Dans ce cas, le deuxième moyen de commutation comprend des moyens pour court-circuiter une à une les résistances de l'ensemble de résistances associées en série à des instants prédéfinis successifs : on pourra par exemple utiliser une série d'interrupteurs commandés par le dispositif de commande, chaque interrupteur étant associé à une résistance de l'ensemble de résistance.

De préférence, on prévoit également dans le dispositif de commande un moyen de protection thermique, pour empêcher la fermeture du premier moyen de commutation (c'est-à-dire empêcher l'utilisation du moyen résistif 50) si un échauffement ou un défaut du moyen résistif 50 est détecté. De préférence, le moyen de protection thermique est indépendant du moyen d'actionnement 13.

Le moyen de protection thermique a ainsi une fonction de prévention et de protection du moyen résistif 50. Toutefois, le démarrage du moteur thermique reste possible, en utilisant seulement le deuxième moyen de commutation 12 (on revient alors à un mode de démarrage connu).

Dans un mode de réalisation, le moyen de protection thermique comprend un moyen pour déterminer la température du moyen résistif 50, un moyen 14 pour empêcher l'actionnement du premier moyen de commutation 11 si la température du moyen résistif est supérieure à une température seuil θ0. Dans un exemple, le moyen de détermination de la température est un capteur de température 70, placé au voisinage du moyen résistif 50 et du démarreur. Dans un autre exemple, le moyen de détermination de la température est un moyen de calcul approprié pour déterminer la température à partir d'un modèle thermique de la machine électrique, d'un modèle thermique du moyen résistif et de paramètres de leurs environnements respectifs. Dans l'exemple de la figure 1, le moyen 14 est un thermocontact normalement fermé et susceptible de s'ouvrir si un échauffement ou un défaut du moyen résistif 50 est détecté.

Le moyen d'actionnement 13 peut dans un premier temps agir préventivement pour réduire le risque de surchauffe du moyen résistif 50 et du démarreur, en limitant le taux de répétition possible des démarrages, en fonction de l'information de température fournie par le moyen 70. Le taux de répétition possible des démarrages est le nombre de démarrage autorisés au cours d'une période de temps donnée.

Ceci est notamment intéressant dans le cas où l'invention est mise en oeuvre dans un véhicule dont le moteur est équipé d'une fonctionnalité dite Stop/Start, qui consiste à arrêter automatiquement le moteur thermique lorsque la vitesse du véhicule est nulle. Dans un tel cas, le moyen d'actionnement 13 agit de préférence sur la réduction du taux de répétition des Stops (arrêts automatique du moteur), ce qui réduit de manière équivalente la fréquence des redémarrages nécessaires. Par exemple, on réduit progressivement le taux de répétition des Stops en diminuant le nombre autorisé de Stops dans une période de temps donnée, lorsque la température augmente et se rapproche de la température seuil θ0 du moyen 14. La figure 1.b représente un tel procédé de commande mis en oeuvre dans le moyen d'actionnement 13. La valeur θ1, qui correspond à un nombre autorisé de démarrages nul, c'est à dire l'interdiction complète de Stop, est de préférence choisie inférieure à la température seuil θ0 du moyen de protection 14.

Sur la figure 1, l'interrupteur 11 et la résistance 50 sont associés en série, et l'interrupteur 12 est associé en parallèle entre une borne de l'interrupteur 11 et une borne de la résistance 50. Ceci permet d'éviter une situation de non redémarrage du moteur thermique, par exemple dans le cas d'une défaillance de la résistance 50.

Le fonctionnement du dispositif de commande selon l'invention est le suivant. A un instant T1, le dispositif de commande 13 reçoit un signal de commande de démarrage, fourni par un utilisateur souhaitant mettre en route le véhicule ou souhaitant maintenir des prestations de confort et / ou de sécurité du véhicule. Le dispositif de commande 13 actionne alors le premier moyen de commutation 11 pour relier en série la source de tension 40, le moyen résistif 50 et la machine électrique 20. A un instant prédéfini T2, le dispositif de commande 13 actionne le deuxième moyen de commutation 12 pour court-circuiter le moyen résistif 50. La machine électrique ME est alors alimentée comme dans les circuits connus.

Le moyen résistif 50 permet de limiter l'appel de courant au démarrage du moteur 20, tant que la vitesse de rotation du moteur 20 n'est pas assez élevée pour générer une force contre-électromotrice suffisante pour contribuer à limiter le courant.

La source de tension 40 est dans l'exemple représenté un accumulateur d'un véhicule, et elle est utilisée par ailleurs pour alimenter, en parallèle de la machine électrique 20, un réseau de bord 60 du véhicule. Le réseau de bord présente à ses bornes une tension Ua et consomme un courant Irdb

Dans la pratique, la constante de temps électrique du circuit alimentant la machine électrique 20 est faible devant la constante de temps mécanique, c'est donc le comportement mécanique de la charge (machine électrique et impédance du circuit électrique) de la source de tension 40 qui définit le courant produit par la source.

Ainsi, dans l'exemple d'une machine électrique de type moteur à courant continu à aimants permanents, on peut écrire, de manière simplifiée :
- Cm = K1 * I
- Um = K2 * Nv + rm*I + Ubc
- Ua = Um + (rc + R) * I, entre les instants T1 et T2
- Ua = Um + rc * I, après l'instant T2
- Ua = U0 - rb * (I + Irdb)
soit, en supposant K1 peu différent de K2 (K1 ≈ K2) .
- I = (U0-K*Nv -Ubc -rb*Irdb) / (rb+rm+rc+R), entre T1 et T2
- I = (U0-K*Nv - Ubc-rb*Irdb) / (rb+rm+rc), après T2
avec :
- Cm le couple mécanique produit par la machine 20,
- Nv la vitesse de rotation du vilebrequin (proportionnelle à la vitesse de rotation N de la machine électrique : Nv = RE*N, avec RE égal au rapport d'entraînement entre un pignon du démarreur et une couronne dentée du moteur thermique,
- K1, K2 des constantes, liées à des paramètres électriques et mécaniques de la machine électrique
- Um la tension aux bornes de la machine électrique 20,
- rm la résistance interne de la machine électrique,
- Ubc la chute de tension correspondant à la somme des pertes par commutation dans la machine électrique et des pertes énergétiques au niveau des balais et des dispositifs de commande de la machine électrique (Ubc est approximativement constante pour simplifier)
- I le courant circulant entre la source 40 et la machine 20,
- Ua la tension aux bornes du réseau de bord, également la tension aux bornes de la source de courant 40,
- rc la résistance des fils de connexion de la machine 20 à la source 40,
- R la résistance électrique du moyen résistif,
- U0 la force électromotrice de la source 40,
- Irdb le courant consommé par le réseau de bord, et
- rb la résistance interne équivalente de la source 40.

Un premier pic de courant apparaît peu de temps après l'actionnement du premier moyen de commutation 11 (instant T1 : fermeture de l'interrupteur 11), puis un deuxième pic de courant apparaît peu de temps après l'actionnement du deuxième moyen de commutation 12 (instant T2 : fermeture de l'interrupteur 12, qui court-circuite de la résistance R).

Les choix de la valeur de la résistance électrique R du moyen résistif 50 et de l'instant T2 où le deuxième moyen de commutation 12 est actionné pour court-circuiter le moyen résistif 50 sont particulièrement importants.

Les choix de la valeur R et de l'instant T2 doivent notamment permettre d'assurer une tension Ua aux bornes du réseau de bord suffisante pour ne pas entraîner un défaut de fonctionnement de ce réseau de bord. Pour cela, on doit garantir Ua supérieure à une valeur Ua_min prédéfinie, pendant toute la phase d'entraînement du moteur thermique par la machine électrique. Ceci nécessite de limiter le courant I consommé par la machine électrique en dessous d'une valeur Imax prédéfinie, y compris dans les situations les plus critiques où le courant Irdb est important (i.e. beaucoup de consommateurs sur le réseau de bord) et / ou U0 est faible et / ou rb est élevée (i.e. accumulateur affaibli), pour garantir que Ua = U0 - rb * (I + Irdb) est supérieure à Ua_min.

Le choix de la résistance R agit sur la valeur du premier pic de courant, et le choix de l'instant T2 agit sur le deuxième pic de courant.

A la fermeture du deuxième moyen de commutation 12, on cherche à ce que la tension générée par la force électromotrice de la machine électrique en rotation vienne à peu près se substituer à la chute de tension à travers la résistance R.

Après T2 (i.e. après court-circuitage de la résistance R), comme I = (U0-K*Nv-rb*Irdb) / (rb+rm+rc), on a I inférieur à Imax si Nv (vitesse de rotation du vilebrequin) est supérieure à une valeur minimale Nvmin. L'expérience et les essais ont mis en évidence la relation empirique : R*Imax ≈ K * Nvmin. (le symbole ≈ signifie environ égal à ).

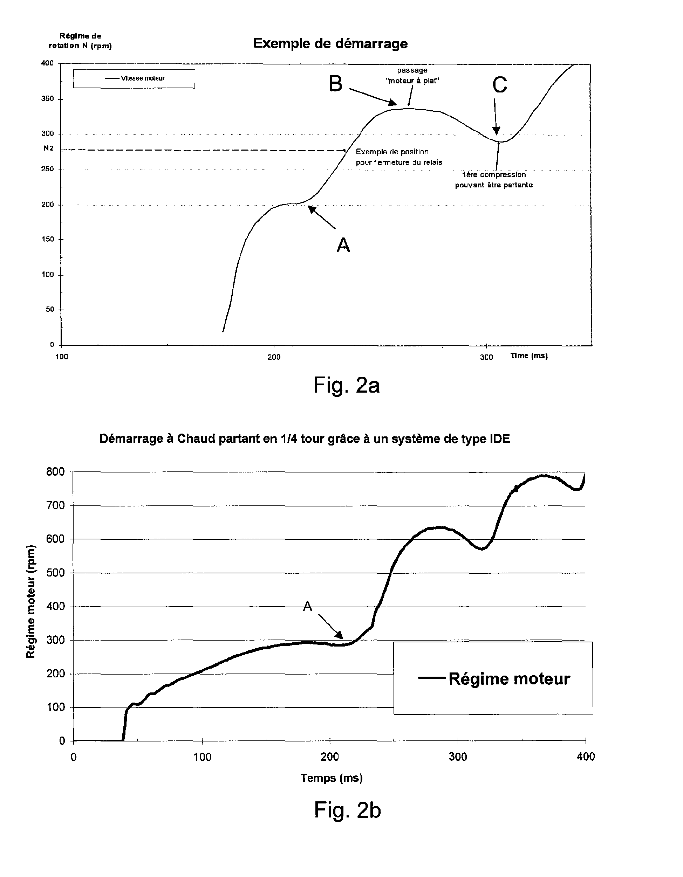

La figure 2a montre à titre d'exemple l'évolution de la vitesse de rotation d'un vilebrequin d'un moteur thermique à quatre cylindres à injection non directe entraîné par la machine électrique, en fonction du temps. Le point A correspond à la première compression dans les cylindres du moteur. Dans un moteur à injection non directe, cette première compression ne permet pas le démarrage du moteur thermique. Le point B correspond au premier passage dans la position "moteur à plat", position dans laquelle tous les pistons sont à mi-course dans les cylindres de sorte que les forces de compression et de détente de l'air dans les cylindres s'équilibrent à peu près. Le point C correspond à la première compression pouvant être partante, i.e. une compression susceptible d'entraîner le démarrage par combustion interne du moteur thermique.

L'expérience montre qu'en choisissant un instant T2 compris entre la première compression et le premier passage "moteur à plat", la condition Ua > Ua_min est garantie. T2 peut ainsi être choisi en fonction de la vitesse et / ou de la position du vilebrequin. T2 peut par exemple être fixé de manière définitive. T2 peut également être déterminé dans une table ou calculé, en fonction par exemple de l'angle initial du vilebrequin, de l'état de la source 40, de la température, ou de tout autre paramètre susceptible d'influencer la valeur des pics de courant au démarrage. T2 peut également être défini comme l'instant où la vitesse Nv du vilebrequin devient supérieure à une valeur prédéfinie Nv0 (la vitesse du vilebrequin est dans ce cas mesurée et comparée à la vitesse Nv0 en continu).

Dans un exemple d'un véhicule avec un réseau de bord alimenté en régime nominal par une tension Ua de l'ordre de 14V, on choisira par exemple Ua_min de l'ordre de 9,5V à 10, 5V, et un courant Imax de l'ordre de 450 A.

La figure 2b montre à titre d'exemple l'évolution de la vitesse de rotation d'un vilebrequin d'un moteur thermique à quatre cylindres à injection directe entraîné par la machine électrique, en fonction du temps. Le point A correspond à la première compression, qui est une compression partante pour ce type de moteur. L'expérience montre dans ce cas qu'en choisissant T2 avant la première compression (point A), la condition Ua > Ua_min est garantie.

Les explications ci-dessus permettent d'envisager plusieurs modes de réalisation du dispositif de commande du dispositif de commande de l'invention, et de préciser, pour chacun, la situation prédéfinie définissant l'instant T2 d'actionnement du deuxième moyen de commutation 12.

Selon un mode de réalisation, on considère que au bout d'un temps prédéfini, on a nécessairement Ua > Ua_min, parce que la machine électrique a atteint une vitesse de rotation suffisante pour limiter le courant appelé à la mise sous tension. Dans ce cas, on prévoit dans le dispositif de commande un circuit de temporisation 15 pour mesurer le temps prédéfini, le deuxième moyen de commutation étant dans ce cas actionné à l'échéance de la temporisation, qui correspond à l'instant T2. Le temps prédéfini peut ici être déterminé par des essais. Le temps prédéfini peut être prévu constant. Le temps prédéfini peut également être variable et déterminé à l'aide d'une table par exemple, ou d'une relation mathématique. Le temps prédéfini peut être fonction par exemple de paramètres de la source de tension 40 (tension U0 à ses bornes, âge de la source, état de charge, vieillissement, dégradation de la source, etc.). Le cas échéant, on prévoira des moyens appropriés pour déterminer les dits paramètres, et des moyens pour déterminer le temps prédéfini. Le temps prédéfini peut être mémorisé dans une mémoire du dispositif de commande, ou bien être recalculé à des intervalles prédéfinis, par exemple tous les 10 ou 100 démarrages du véhicule.

Selon un autre mode de réalisation, on considère que la tension Ua est nécessairement supérieure à Ua_min dès que la vitesse Nv de rotation du vilebrequin a atteint la valeur Nvmin. Dans ce cas, on prévoira dans le dispositif de commande, un moyen 16 pour mesurer la vitesse de rotation du vilebrequin, le deuxième moyen de commutation étant alors actionné à l'instant T2 où la vitesse Nv dépasse une valeur prédéfinie, en l'espèce sa valeur minimale Nvmin.

A noter également que, la vitesse de rotation du vilebrequin étant directement proportionnelle à la vitesse de rotation de la machine électrique, il est possible de définir l'instant T2 comme l'instant où la vitesse N de rotation de la machine électrique dépasse une valeur minimale Nmin, proportionnelle à Nvmin.

A noter que le moyen de mesure de la vitesse de rotation peut être un capteur de vitesse utilisé pour d'autres applications dans le véhicule, comme par exemple la commande du système d'injection du moteur. Il n'est pas nécessaire d'utiliser un capteur additionnel.

Selon un autre mode de réalisation encore, on considère que la tension Ua est nécessairement supérieure à la tension Ua_min dès que l'angle α de rotation du vilebrequin a dépassé une valeur minimale αmin. Dans ce cas, on prévoira dans le dispositif de commande un moyen 17 pour mesurer un angle absolu de rotation du vilebrequin, le deuxième moyen de commutation étant alors actionné lorsque l'angle de rotation du vilebrequin dépasse un angle prédéfini, en l'espèce la valeur minimale αmin. Le choix de la valeur αmin est représenté sur la figure 1c.

αmin peut être défini comme un écart angulaire Δα par rapport à une position de référence α0 du vilebrequin. Par exemple, on peut choisir α0 égal à l'angle du vilebrequin lors du premier point mort haut, c'est-à-dire lors de la première compression, partante ou non. Le deuxième moyen de commutation est dans ce cas actionné lorsque l'angle de rotation du vilebrequin est égal à αmin = α0 + Δα. Ce choix permet de garantir que la vitesse Nv de rotation du vilebrequin est suffisante (supérieure à Nvmin) en profitant de la phase de détente qui suit le point mort haut.

αmin peut également être défini de manière à correspondre au parcours par le vilebrequin d'un secteur angulaire prédéfini, par exemple un demi-tour (180°) par rapport à une position initiale.

A noter que le moyen de mesure de l'angle de rotation α peut être un capteur utilisé pour d'autres applications dans le véhicule. Il n'est pas nécessaire d'utiliser un capteur additionnel.

Les moyens 16 et 17 peuvent utiliser un même capteur d'angle α de rotation du vilebrequin. On complète dans ce cas les moyens 16 par des moyens de calcul adaptés pour dériver la vitesse Nv de rotation du vilebrequin à partir de la position du vilebrequin.

Selon un autre mode de réalisation encore, on prévoit dans le dispositif de commande un moyen 18 pour mesurer la tension Ua aux bornes du réseau de bord. Le deuxième moyen de commutation 12 est dans ce cas actionné lorsque la tension d'alimentation Ua dépasse une valeur seuil Ua_ref, choisie de sorte que le court-circuitage du moyen résistif 50 par deuxième moyen de commutation 12 ne fasse pas descendre Ua en dessous de Ua_min. On montre expérimentalement qu'une valeur de Ua_ref peut être déterminée à partir de Ua_min + rb*Imax.

Les différents modes de réalisation décrits ci-dessus peuvent être mis en oeuvre séparément. Mais il est également possible de mettre en oeuvre plusieurs modes en combinaison. Par exemple, on peut envisager un dispositif de commande comprenant à la fois un moyen pour mesurer l'angle de rotation α du vilebrequin et un moyen pour mesurer la vitesse de rotation N du vilebrequin. Dans ce cas, on prévoira d'actionner le deuxième circuit de commutation, au choix, lorsque l'angle de rotation est supérieur à la valeur αmin et / ou lorsque Nv est supérieur à Nvmin.

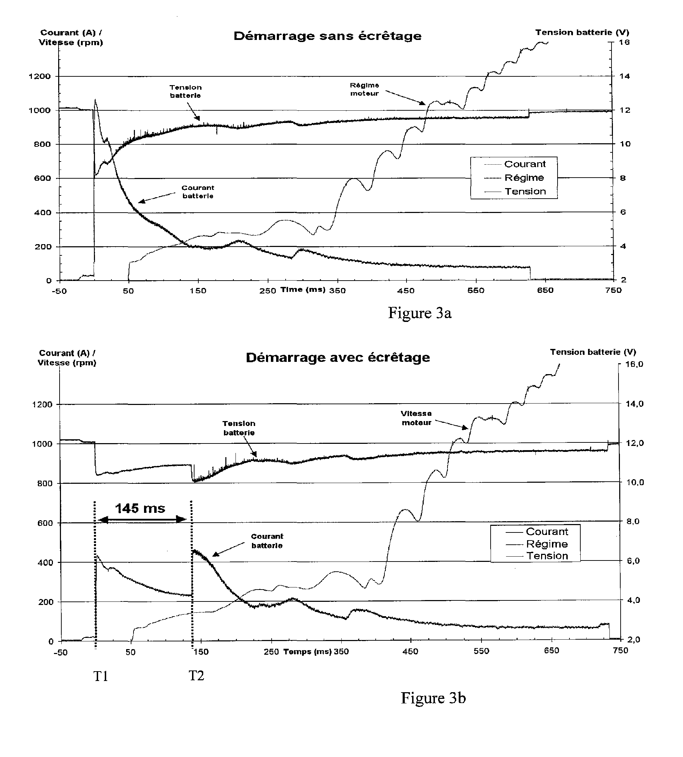

Sur la figure 3a ont été représentés la vitesse de rotation d'une machine électrique commandée par un dispositif de commande selon l'art antérieur, et le courant et la tension d'une source d'énergie alimentant la machine électrique.

Sur la figure 3b ont été représentés la vitesse de rotation d'une machine électrique commandée par un dispositif de commande selon l'invention, et le courant et la tension d'une source d'énergie alimentant la machine électrique.

Sur la figure 3b, T1 est l'instant de fermeture du premier moyen de commutation, correspondant à la mise sous tension de la machine électrique, et T2 est l'instant de fermeture du deuxième moyen de commutation, correspondant au court-circuitage du moyen résistif.

L'effet du moyen résistif et du dispositif de commande selon l'invention apparaît clairement sur les figures 3a, 3b :
Sans le moyen résistif et le dispositif selon l'invention (figure 3a), le courant I atteint environ 1100 A lors du pic de démarrage peu après T1, bien au dessus de sa valeur maximale admissible égale à environ 500 A ; la tension Ua quant à elle chute à environ 8 V, au-dessous de sa valeur minimale acceptable de l'ordre de 10 V.
Avec le moyen résistif et le dispositif de commande selon l'invention, le courant reste en dessous de 450 A environ, même lors du pic de démarrage, et la tension au bord du réseau de bord reste au dessus de 10 V.

A noter que, dans l'exemple de réalisation décrit, le dispositif de commande selon l'invention est utilisé pour la commande d'un démarreur électrique susceptible d'être couplé à l'entraînement d'un vilebrequin d'un moteur à combustion interne.

Plus généralement, le dispositif selon l'invention peut être utilisé pour la commande de toute machine électrique qui est alimentée par une source d'énergie électrique et qui, au démarrage, subit une forte résistance mécanique due à une charge qu'elle entraîne en rotation.

## Revendications

1. Dispositif de commande (10) d'une machine électrique (20), notamment pour la commande d'un démarreur électrique susceptible d'être couplé à l'entraînement d'un vilebrequin (30) d'un moteur à combustion interne, **caractérisé en ce qu'**il comprend
• un premier moyen de commutation (11) pour relier électriquement en série une source de tension (40), un moyen résistif (50) de démarrage et la machine électrique (20),
• un deuxième moyen de commutation (12) pour court-circuiter le moyen résistif (50), et
• un moyen d'actionnement (13) pour actionner le premier moyen de commutation (11) au démarrage de la machine électrique (20) puis actionner le deuxième moyen de commutation (12) dans une situation prédéfinie.

2. Dispositif de commande selon l'une des revendications précédentes, dans lequel le premier moyen de commutation et / ou le deuxième moyen de commutation sont des interrupteurs commandés de type relais électromécaniques.

3. Dispositif de commande selon l'une des revendications 1 à 2, dans lequel le moyen résistif est une résistance de puissance.

4. Dispositif de commande selon l'une des revendications 1 à 2, dans lequel le moyen résistif est un ensemble de résistances associées en série, et dans lequel le deuxième moyen de commutation comprend des moyens pour court-circuiter une à une les résistances de l'ensemble de résistances associées en série à des instants prédéfinis successifs.

5. Dispositif de commande selon l'une des revendications précédentes, comprenant également un moyen de protection thermique (14), de préférence indépendant du moyen d'actionnement (13), pour empêcher l'actionnement du premier moyen de commutation (11) si un échauffement ou un défaut du moyen résistif est détecté.

6. Dispositif de commande selon l'une des revendications précédentes, comprenant également un moyen (70) délivrant une information de température du moyen résistif et du démarreur au moyen d'actionnement (13) qui agit de manière à réduire un taux de répétition des démarrages autorisés lorsque la température se rapproche de la température seuil (θ0) du moyen de protection (14).

7. Dispositif de commande selon l'une des revendications 1 à 6, comprenant également un moyen de temporisation (15) pour mesurer un temps prédéfini, et dans lequel le moyen d'actionnement actionne le deuxième moyen de commutation à l'échéance du temps prédéfini (T2).

8. Dispositif de commande selon l'une des revendications 1 à 6, dans lequel la situation prédéfinie est fonction d'un état de performance de la source de tension, fonction :
• d'un âge de la source de tension, et / ou
• d'un état de santé de la source de tension et / ou
• d'une charge de la source de tension, et / ou
• d'une tension aux bornes de la source de tension avant l'actionnement du premier moyen de commutation.

9. Dispositif de commande selon l'une des revendications 1 à 6, comprenant également un moyen pour mesurer une vitesse de rotation (16) du vilebrequin, et dans lequel le moyen d'actionnement actionne le deuxième moyen de commutation lorsque la vitesse de rotation du vilebrequin dépasse une valeur prédéfinie.

10. Dispositif de commande selon l'une des revendications 1 à 6, comprenant également un moyen pour mesurer un angle absolu de rotation (17) du vilebrequin, et dans lequel le moyen d'actionnement actionne le deuxième moyen de commutation :
• lors d'un deuxième passage du vilebrequin dans une position dite "moteur à plat", ou
• un écart angulaire après une première compression d'un cylindre du moteur.

11. Dispositif de commande selon l'une des revendications 1 à 6, comprenant également un moyen pour mesurer une tension d'alimentation (18) d'un réseau électrique secondaire (60) alimenté par la source de tension (40) en parallèle de la machine électrique, et dans lequel le moyen d'actionnement actionne le deuxième moyen de commutation lorsque la tension d'alimentation du réseau secondaire est supérieure à une valeur prédéfinie.
